# EUROPÄISCHE PATENTANMELDUNG

(11) **EP 4 113 964 A1**
(43) Veröffentlichungstag der Anmeldung: **04.01.2023**
(21) Anmeldenummer: 21182815.7
(22) Anmeldetag: 30.06.2021
(51) Int. Cl.: H04N 1/405, H04N 1/407, H04N 1/60

(54) **VERFAHREN ZUR FARBKORREKTUR EINES DIGITALDRUCKES**

(71) Anmelder: Akzenta Paneele + Profile GmbH, 56759 Kaisersesch (DE)
(72) Erfinder: Klemm. Markus, Düsseldorf (DE); Linnenbrügger, Timo, Düsseldorf (DE); Hanning, Hans-Jürgen, Düsseldorf (DE)
(74) Vertreter: Michalski Hüttermann & Partner Patentanwälte mbB

(57) **Zusammenfassung**

Die vorliegende Erfindung schlägt ein Verfahren zur Farbkorrektur eines Digitaldruckes, wobei der Digitaldruck die Ausgabe eines vorgegebenen Digitalbildes mit einem Digitaldrucker vorsieht, wobei das vorgegebenen Digitalbild dem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über vom Drucker zu setzende Druckpunkte des entsprechenden Druckfarbkanals aufweist und wobei ein Druckpunkt durch seine Druckposition und Druckpunktgröße definiert ist, wobei das Verfahren die Schritte aufweist: a) Bereitstellen von Korrekturdaten für den Digitaldruck, wobei die Korrekturdaten zumindest einen Korrekturwert für zumindest ein Farbkanalbild umfassen, b) Anwenden der Korrekturdaten auf das farbseparierte Digitalbild, wobei ein farbkorrigiertes farbsepariertes Digitalbild erhalten wird, c) optional Drucken des farbkorrigierten farbseparierten Digitalbildes mit dem Digitaldrucker.

## Beschreibung

Die vorliegende Erfindung betrifft ein Verfahren zur Farbkorrektur eines Digitaldruckes, eine Vorrichtung zur Durchführung des Verfahrens und eine Verwendung des Verfahrens.

Verfahren zur Farbkorrektur von Digitaldrucken sind an sich bekannt. Dabei werden Abweichungen von dem erwarteten Druckergebnis ermittelt und beim Druck derart berücksichtigt, dass der Druck mehr dem erwarteten Druckergebnis entspricht.

Ein großes Problem bei der Ausgabe von Digitalbildern ist es beim wiederholten Drucken eines Digitalbildes, auch nach längeren Pausen, Drucke zu erreichen, die möglichst geringe Abweichungen zu einem Referenzdruck aufweisen. Die Gründe für auftretende Abweichungen sind vielfältiger Natur, beispielsweise kann der Druckuntergrund bezüglich Farbe und Verlaufseigenschaften Unterschiede aufweisen oder der Drucker kann sich über die Zeit verändern. Um aktuelle farblichen Abweichungen schnell korrigieren zu können, kann z.B. an Systemen die auf einem Tintenstrahldrucker basieren mit Hilfe einer Einstellung der Druckkopfspannung eine farbliche Korrektur vorgenommen werden. Dieses verändert aber den optimalen Arbeitspunkt des Druckkopfes und kann somit nur bedingt korrigierend eingesetzt werden. Eine andere Möglichkeit ist mit Hilfe des zum Ausgabegerätes gehörenden Colormanagements neue farblich korrigierte Druckdaten zu erzeugen. Je nach Integration des Colormanagements in die Druckmaschine, der Zugänglichkeit der Druckmaschinenbediener auf das Colormanagement, sowie die Schnelligkeit des Colormanagements und der Gesamtgröße der digitalen Bilddatei, kann dieser Prozess aber ein nicht unerhebliche Zeit in Anspruch nehmen.

Verfahren zur Farbkorrektur von Digitaldrucken können somit noch Verbesserungspotential bieten. Verbesserungspotential kann sich insbesondere darin bieten, dass die Farbkorrektur schneller und einfacher erfolgen kann, insbesondere ohne dass auf den vorgelagerten Colormanagement-Prozess zurückgegriffen werden muss und/oder die Druckkopfspannung angepasst werden muss.

Gelöst wird diese Aufgabe durch das Verfahren zur Farbkorrektur eines Digitaldruckes gemäß Anspruch 1 sowie ferner durch die Vorrichtung nach Anspruch 14 und die Verwendung nach Anspruch 15. Bevorzugte Ausgestaltungen der Erfindung sind in den Unteransprüchen und in der Beschreibung angegeben, wobei weitere in den Unteransprüchen oder in der Beschreibung beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Verfahren zur Farbkorrektur eines Digitaldruckes vorgeschlagen, wobei der Digitaldruck die Ausgabe eines vorgegebenen Digitalbildes mit einem Digitaldrucker vorsieht, wobei das vorgegebenen Digitalbild dem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über vom Drucker zu setzende Druckpunkte des entsprechenden Druckfarbkanals aufweist und wobei ein Druckpunkt durch seine Druckposition und Druckpunktgröße definiert ist,
wobei das Verfahren die Schritte aufweist:
a) Bereitstellen von Korrekturdaten für den Digitaldruck, wobei die Korrekturdaten zumindest einen Korrekturwert für zumindest ein Farbkanalbild umfassen,
b) Anwenden der Korrekturdaten auf das farbseparierte Digitalbild, wobei ein farbkorrigiertes farbsepariertes Digitalbild erhalten wird,
c) optional Drucken des farbkorrigierten farbseparierten Digitalbildes mit dem Digitaldrucker.

Unter einem Digitaldrucker wird im Sinne der vorliegenden Erfindung insbesondere eine Vorrichtung verstanden, die farbige Druckpunkte auf einem Substrat ausgeben kann, die das entsprechende Bild ausbilden.

Unter einem Digitalbild wird im Sinne der vorliegenden Erfindung insbesondere ein digital speicherbares Bild verstanden, dessen Bildinformationen über Bildpunkte bestimmt sind, die jeweils einen Farbwert bezüglich eines Farbsystems aufweisen. Ein vorgegebenes Digitalbild ist im Sinne der vorliegenden Erfindung ein Digitalbild das zum Drucken vorgesehen ist.

Darunter, dass das vorgegebenen Digitalbild dem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über vom Drucker zu setzende Druckpunkte des entsprechenden Druckfarbkanals aufweist und wobei ein Druckpunkt durch seine Druckposition und Druckpunktgröße definiert ist, ist im Sinne der vorliegenden Erfindung zu verstehen, dass das vorgegebene Digitalbild dem Digitaldrucker insbesondere als Digitalbild bereitgestellt wird, das einem RIP-Prozess (Raster Image Processor, Rastergrafikprozessor) entstammt, das also entsprechend der gewünschten Druckart schon an die Druckfarbkanäle des Digitaldruckers und beispielsweise auch an die Druckauflösung des Druckers angepasst ist.

Unter einem Farbkanalbild ist im Sinne der vorliegenden Erfindung ist insbesondere ein Teil des Digitalbildes zu verstehen der nur die Informationen zu einem Farbkanal des Farbsystems aufweist in dem das Digitalbild gespeichert ist. Beispielsweise kann das Digitalbild über Farbwerte im CMYK Farbsystem definiert sein und ein Farbkanalbild weist beispielsweise nur die Farbwerte des C-Farbkanals auf.

Unter einem Druckfarbkanal ist im Sinne der vorliegenden Erfindung insbesondere ein Farbkanal zu verstehen, in dem der Drucker drucken kann. Beispielsweise kann der Drucker zum Drucken im CMYK Farbsystem vorgesehen sein und ein Druckfarbkanal kann der C-Farbkanal sein.

Es ist also in anderen Worten insbesondere vorgesehen, dass das Digitalbild aus solchen Farbkanalbildern zusammengestellt ist, die den Druckfarbkanälen des Digitaldruckers entsprechen. Beispielsweise kann vorgesehen sein, dass das Digitalbild im CMYK Farbsystem über die Farbkanalbilder des C-Farbkanals und des M-Farbkanals bestimmt ist und der Drucker ein Drucker ist, der im CMYK Farbsystem drucken kann. Somit wird den Farbkanalbildern C und M des Digitalbildes jeweils der Druckfarbkanal C und M zugeordnet.

In anderen Worten wird also das vorgegebenen Digitalbild dem Digitaldrucker so als farbsepariertes Digitalbild bereitgestellt, dass es direkt für das Drucken auf dem Digitaldrucker geeignet ist, und entsprechende Informationen über die zu setzenden Druckpunkte der Druckfarbkanäle aufweist.

Es kann dadurch vorteilhafterweise erreicht werden, dass das vorgegebenen Digitalbild direkt gedruckt werden kann und nicht auf das ursprüngliche vorgegebene Digitalbild zurückgegriffen werden muss.

Das Verfahren weist die Schritte auf:
a) Bereitstellen von Korrekturdaten für den Digitaldruck, wobei die Korrekturdaten zumindest einen Korrekturwert für zumindest ein Farbkanalbild umfassen,
b) Anwenden der Korrekturdaten auf das farbseparierte Digitalbild, wobei ein farbkorrigiertes farbsepariertes Digitalbild erhalten wird,
c) optional Drucken des farbkorrigierten farbseparierten Digitalbildes mit dem Digitaldrucker.

Unter dem Bereitstellen von Korrekturdaten für den Digitaldruck ist im Sinne der vorliegenden Erfindung insbesondere ein Bereitstellen von Daten zu verstehen, die dazu geeignet sind farbliche Abweichungen von einem Druck des vorgegebenen Digitalbildes zum vorgegebenen Digitalbild zu beschreiben.

Unter dem Anwenden der Korrekturdaten auf das farbseparierte Digitalbild ist im Sinne der vorliegenden Erfindung insbesondere zu verstehen, dass das farbseparierte Digitalbild unter Anwendung der Korrekturdaten so verändert wird, dass das farbkorrigierte separierte Digitalbild die Korrekturdaten so berücksichtigt, dass die farblichen Abweichungen vom Druck des vorgegebenen Digitalbildes beim Druck des farbkorrigierten farbseparierten Digitalbildes korrigiert werden. In anderen Worten ist darunter zu verstehen, dass das farbseparierte Digitalbild, welches insbesondere bereits durch einen RIP-Prozess aus dem vorgegebenen Digitalbild erhalten wurde, direkt unter Anwendung der Korrekturdaten erneut einem RIP-Prozess unterzogen wird. Insbesondere werden die Korrekturdaten nicht auf das originale vorgegebene Digitalbild angewendet.

Unter einem Korrekturwert wird dabei im Sinne der vorliegenden Erfindung insbesondere ein Wert verstanden, der proportional zu einer Farbabweichung einer Farbe eines mit dem Digitaldrucker gedruckten Bildes, insbesondere auch in Abhängigkeit der Druckposition, zu der Farbe des für den Druck verwendeten Bildes ist. In anderen Worten ist ein Korrekturwert im Sinne der vorliegenden Erfindung insbesondere proportional zu einer Farbabweichung, wobei die Farbabweichung in Abhängigkeit der Druckposition angegeben sein kann. Insbesondere kann der Korrekturwert in Abhängigkeit des verwendeten Druckers, eines zur Bestimmung der Farbabweichung verwendeten Messgerätes und/oder anderer für den Druck verwendeten Gerätschaften ein bestimmtes Verhältnis zur Farbabweichung aufweisen. Das Verhältnis des Korrekturwertes zur Farbabweichung kann dabei bevorzugt durch Referenzmessungen bestimmt werden.

Durch das vorgeschriebenen Verfahren kann vorteilhafterweise erreicht werden, dass die Farbkorrektur vergleichsweise schneller und einfacher erfolgen kann. Insbesondere kann dadurch, dass die Korrekturdaten auf das farbseparierte Digitalbild angewendet werden erreicht werden, dass nicht auf den vorgelagerten Colormanagement-Prozess zurückgegriffen werden muss, also insbesondere auch nicht auf die originalen Daten des vorgegebenen Digitalbildes zurückgegriffen werden muss, und zudem die Druckkopfspannung nicht für die Farbkorrektur angepasst werden muss. Dadurch, dass nicht auf das originale vorgegebene Digitalbild zurückgegriffen werden muss, kann besonders viel Zeit gespart werden. Beispielsweise kann das Verfahren je nach Rechnergeschwindigkeit und Bildgröße innerhalb weniger Sekunden komplett neue farbkorrigierte farbseparierte Druckdateien erzeugen, welche dann umgehend gedruckt werden können. Die originalen Bilddateien, als auch die ursprünglich gerippten farbseparierten Bilddateien bleiben hierbei erhalten.

Bevorzugt kann vorgesehen sein, dass der Korrekturwert auf die für das Farbkanalbild vorgesehenen Druckpunkte angewendet wird, insbesondere durch Anpassung der Druckpunktgrößen von zumindest einem Teil der Druckpunkte des Farbkanalbildes in Abhängigkeit des Korrekturwertes.

Dadurch kann erreicht werden, dass die Farbkorrektur besonders einfach durchgeführt werden kann.

Beispielsweise kann vorgesehen sein, dass das Digitalbild im CMYK Farbsystem über die Farbkanalbilder des C-Farbkanals und des M-Farbkanals bestimmt ist und der Drucker ein Drucker ist, der im CMYK Farbsystem drucken kann, wobei die bereitgestellten Korrekturdaten beispielsweise beschreiben, dass das gedruckte Bild einen im Vergleich zum vorgegebenen Digitalbild zu starken C-Anteil aufweist. Der Korrekturwert umfasst dann beispielsweise für den C-Farbkanal einen negativen Wert, der auf die Druckpunktgrößen der Druckpunkte des C-Farbkanalbildes angewendet wird, indem Druckpunkte des C-Farbkanals verkleinert werden. Somit weist das farbkorrigierte farbseparierte Digitalbild im Vergleich zum farbseparierten Digitalbild einen niedrigeren C-Anteil auf. Bei einem Druck des farbkorrigierten farbseparierten Digitalbildes weist der Druck dann den eigentlich für den Druck des vorgegebenen Digitalbildes gewollten C-Anteil auf.

Indem die Korrekturwerte direkt auf die Druckpunktgrößen angewendet werden, kann erreicht werden, dass das Verfahren besonders einfach und schnell durchgeführt werden kann.

Bevorzugt kann vorgesehen sein, dass der Korrekturwert nicht auf die Druckpunktgröße von Druckpunkten angewendet wird, deren Druckpunktgröße 0 ist.

Unter Druckpunkten mit einer Druckpunktgröße von 0 werden Druckpunkte verstanden, für die gemäß dem farbseparierten Digitalbild vorgesehen ist, dass überhaupt kein Druckpunkt an dieser Stelle für zumindest den betroffenen Farbkanal gesetzt wird.

Dadurch kann erreicht werden, dass die Korrekturwerte nicht auf Stellen des farbseparierten Digitalbildes angewendet werden, die den Farbwert für Weiß aufweisen. Somit kann erreicht werden, dass die Farbkorrektur besonders effizient ist und nicht zugleich farbliche Artefakte erzeugt werden.

Bevorzugt kann vorgesehen sein, dass die Druckpunktgrößen der Druckpunkte der Farbkanalbilder eine begrenzte Anzahl diskreter Druckpunktgrößenwerte annehmen können, insbesondere eine durch den Digitaldrucker begrenzte Anzahl.

Unter einer begrenzten Anzahl diskreter Druckpunktgrößenwerte ist zu verstehen, dass die Druckpunkte nur eine endliche Zahl verschiedener Druckpunktgrößenwerte annehmen können. Beispielsweise kann der Digitaldrucker dafür vorgesehen sein, nur Druckpunkte in kleiner oder gleich 255 verschiedenen Druckpunktgrößen zu drucken. Dabei sind Digitaldrucker üblicherweise dazu ausgestaltet meist weniger als 20, insbesondere weniger als 10 verschiedene Druckpunktgrößen zu drucken.

Bevorzugt kann vorgesehen sein, dass der Korrekturwert beim Anwenden der Korrekturdaten derart auf die Druckpunktgrößen der Druckpunkte angewendet wird, dass nicht der Druckpunktgrößenwert jedes Druckpunktes verändert wird.

Dadurch kann erreicht werden, dass auch kleine Korrekturwerte bei der Farbkorrektur berücksichtigt werden, insbesondere Korrekturwerte, die kleiner sind als der Unterschied zwischen zwei aufeinanderfolgenden Druckpunktgrößenwerten.

Bevorzugt kann vorgesehen sein, dass der Korrekturwert derart angewendet wird, dass der Korrekturwert auf die für das Farbkanalbild vorgesehenen Druckpunkte verteilt wird, wobei das Verteilen des Korrekturwertes bevorzugt derart erfolgen kann, dass der über die Summe der Druckpunkte erreichte Farbunterschied insgesamt dem Korrekturwert entspricht.

Darunter ist insbesondere zu verstehen, dass der Korrekturwert beim Anwenden der Korrekturdaten derart auf die Druckpunktgrößen der Druckpunkte angewendet wird, dass die erfolgten Druckpunktgrößenänderungen insgesamt dem Korrekturwert entsprechen.

In anderen Worten kann der Korrekturwert, mit den erfolgten Druckpunktgrößenänderungen für die Druckpunkte des Farbkanalbildes dargestellt werden.

Bevorzugt kann vorgesehen sein, dass das Verteilen des Korrekturwertes auf die für das Farbkanalbild vorgesehenen Druckpunkte nach dem gleichen RIP-Prozess erfolgt, der dem vorgegebene Digitalbild zu Grunde liegt.

Dadurch kann erreicht werden, dass das Verteilen des Korrekturwertes auf die für das Farbkanalbild vorgesehenen Druckpunkte automatisch die Positionen der Druckpunkte des Farbkanalbildes berücksichtigt und/oder die begrenzte Anzahl diskreter Druckpunktgrößenwerte.

In anderen Worten bleibt die Anzahl und Position der ursprünglich definierten Druckpunkte erhalten und bei allen, oder nur bei einem Teil der Druckpunkte wird die Druckpunktgröße erhöht oder verkleinert.

Bevorzugt kann vorgesehen sein, dass für das Verteilen des Korrekturwertes auf die für das Farbkanalbild vorgesehenen Druckpunkte nacheinander, insbesondere nach einer vorgegebenen Reihenfolge, für jeden Druckpunkt des Farbkanalbildes bestimmt wird, um welche Druckpunktgröße der Druckpunkt verändert werden soll.

Bevorzug kann vorgesehen sein, dass beim Anwenden des Korrekturwertes für die jeweilige Druckpunktposition diese Position nur die gleiche begrenzte Anzahl an Druckpunktgrößenwerten annehmen kann wie die Druckpunkte.

Bevorzugt kann vorgesehen sein, dass die vorgegebene Reihenfolge entsprechend dem gleichen RIP-Prozess erfolgt, der dem vorgegebene Digitalbild zu Grunde liegt.

Bevorzugt kann vorgesehen sein, dass beim nacheinander Anwenden des für die jeweilige Druckposition bestimmten Korrekturwertes, für den Fall, dass der Korrekturwert für eine bestimmte Druckpunktposition einen Schwellwert erreicht, der Druckpunktgrößenwert des Druckpunktes des Farbkanalbildes mit der entsprechenden Druckpunktposition beim Anwenden der Korrekturdaten entsprechend erhöht oder erniedrigt wird.

In anderen Worten kann demnach vorgesehen sein, dass durch die Anwendung der Korrekturdaten auf das farbseparierte Digitalbild nur dann die Druckpunktgröße eines Druckpunktes beim Verteilen des Korrekturwertes angepasst wird, wenn der entsprechende Korrekturwert für die Druckpunktposition des entsprechenden Druckpunktes einen bestimmten Schwellwert erreicht.

Dadurch kann erreicht werden, dass eine durch die Drucktechnik begrenzte Anzahl an Druckpunktgrößen angemessen in der Farbkorrektur berücksichtigt wird, so dass trotzdem eine effiziente Farbkorrektur möglich ist.

Bevorzugt kann vorgesehen sein, dass der Schwellwert dem Farbwertunterschied zwischen zwei aufeinanderfolgenden Druckpunktgrößenwerten entspricht, wobei für den Fall, dass der Korrekturwert das n-Fache des Schwellwertes erreicht, der Druckpunktgrößenwert der Druckpunkte des Farbkanalbildes beim Anwenden der Korrekturdaten entsprechend um n Druckpunktgrößenwerte erhöht oder erniedrigt wird, wobei n eine natürliche Zahl ist.

Unter aufeinanderfolgenden Druckpunktgrößenwerten sind im Sinne der vorliegenden Erfindung die Größenwerte von einer möglichen Druckpunktgröße und von der nächstgrößeren oder nächstkleineren Druckpunktgröße zu verstehen.

Dadurch kann erreicht werden, dass die Farbkorrektur proportional auch bei kleinen und bei großen Druckpunkten gut erfolgt und auch bei kleinen und großen Korrekturwerten besonders effizient ist.

Bevorzugt kann vorgesehen sein, dass beim nacheinander Anwenden des für die jeweilige Druckposition bestimmten Korrekturwertes, für den Fall, dass der Korrekturwert für eine bestimmte Druckpunktposition den Schwellwert nicht erreicht, der Druckpunktgrößenwert des Druckpunktes des Farbkanalbildes mit der entsprechenden Druckpunktposition beim Anwenden der Korrekturdaten entsprechend nicht erhöht oder erniedrigt wird, wobei der Korrekturwert für das Bestimmen des nächsten Druckpunktes mit berücksichtigt wird.

In anderen Worten kann vorgesehen sein, dass bei Korrekturwerten, die kleiner sind als der kleinste Druckpunktgrößenunterschied, der Korrekturwert, beim nacheinander Bestimmen um welche Druckpunktgröße ein Druckpunkt verändert werden soll, so lange akkumuliert bzw. auf andere Druckpunkte verteilt wird, bis der Schwellwert erreicht wird und der Druckpunktgrößenwert des entsprechenden Druckpunktes erhöht oder erniedrigt wird.

Bevorzugt kann vorgesehen sein, dass der Korrekturwert mit einem Algorithmus auf verschiedene noch nicht korrigierte Druckpunkte verteilt wird, beispielsweise mit einem Fehler-Verteilungsalgorithmus.

Bevorzugt kann vorgesehen sein, dass beim nacheinander Bestimmen um welche Druckpunktgröße ein Druckpunkt verändert werden soll, für den Fall, dass der Korrekturwert das n-Fache des Schwellwertes überschreitet, die Differenz des n-Fachen Schwellwertes und des Korrekturwertes für das Bestimmen des nächsten Druckpunktes mit berücksichtigt wird.

In anderen Worten kann vorgesehen sein, dass bei Korrekturwerten, die nicht genau einem möglichen Druckpunktgrößenunterscheid entsprechen, der restliche Korrekturwert, beim nacheinander Bestimmen um welche Druckpunktgröße ein Druckpunkt verändert werden soll, so lange akkumuliert bzw. verteilt wird, bis die akkumulierten restlichen Korrekturwerte den Schwellwert erreichen und der Druckpunktgrößenwert des entsprechenden Druckpunktes um n+1 Druckpunktgrößenwerte erhöht oder erniedrigt wird.

Bevorzugt kann vorgesehen sein, dass für den Fall, dass der Druckpunktgrößenwert eines Druckpunktes beim Anwenden der Korrekturdaten kleiner werden soll als der kleinste mögliche Druckpunktgrößenwert, die Druckpunktgröße des Druckpunktes auf die Druckpunktgröße 0 gesetzt wird.

Darunter ist im Sinne der vorliegenden Erfindung zu verstehen, dass an der entsprechenden Stelle im farbkorrigierten farbseparierten Digitalbild es vorgesehen ist, überhaupt kein Druckpunkt für zumindest den betroffenen Farbkanal zu setzen.

Bevorzugt kann vorgesehen sein, dass für den Fall, dass der Druckpunktgrößenwert eines Druckpunktes beim Anwenden der Korrekturdaten größer werden soll als der größte mögliche Druckpunktgrößenwert, die Druckpunktgröße des Druckpunktes auf den größten möglichen Druckpunktgrößenwert gesetzt wird.

Bevorzug kann vorgesehen sein, dass ein Anwenden der Korrekturwerte für die jeweilige Druckposition nur dann erfolgt, wenn sich an dieser Stelle im originalen gerasterten Bild ein Druckpunkt befindet, welcher eine Druckpunktgröße hat, die größer als Null ist.

Bevorzugt kann vorgesehen sein, dass beim Ändern des Druckpunktgrößenwerts der Druckpunkte des Farbkanalbildes beim Anwenden der Korrekturdaten ein Fehler-Verteilungsalgorithmus angewendet wird (Dithering), beispielsweise ein Floyd-Steinberg-Algorithmus.

Unter dem Anwenden eines Fehler-Verteilungsalgorithmus wird im Sinne der vorliegenden Erfindung verstanden, dass die Korrekturwerte gemäß einem Algorithmus, wie er auch im RIP-Prozess bei der Erstellung von farbseparierten Digitalbildern angewendet werden kann, auf benachbarte Druckpunkte verteilt werden.

Dadurch kann erreicht werden, dass die Farbkorrektur eine gleichmäßigere Wirkung hat und Artefakte vermieden werden können.

Insbesondere kann bevorzugt vorgesehen sein, dass die Anwendung des Fehler-Verteilungsalgorithmus erfolgt in den Fällen, in denen der Druckpunktgrößenwert eines Druckpunktes beim Anwenden der Korrekturdaten kleiner werden soll als der kleinste mögliche Druckpunktgrößenwert und die Druckpunktgröße des Druckpunktes auf die Druckpunktgröße 0 gesetzt wird und/oder in denen der Druckpunktgrößenwert eines Druckpunktes beim Anwenden der Korrekturdaten größer werden soll als der größte mögliche Druckpunktgrößenwert und die Druckpunktgröße des Druckpunktes auf den größten möglichen Druckpunktgrößenwert gesetzt wird.

Dadurch kann erreicht werden, dass die Farbkorrektur auch in Bereichen mit hoher und niedriger Farbdichte besonders erfolgreich ist.

In einer bevorzugten Ausgestaltung kann vorgesehen sein, dass die Anwendung der Korrekturdaten auf das farbseparierte Digitalbild an jeder Stelle des Digitalbildes unabhängig von einer Farbdichte des farbseparierten Digitalbildes erfolgt.

Dadurch kann erreicht werden, dass die Farbkorrektur besonders einfach ist und trotzdem ein gutes Ergebnis erreicht werden kann.

In einer alternativen bevorzugten Ausgestaltung kann vorgesehen sein, dass die Anwendung der Korrekturdaten auf das farbseparierte Digitalbild in Abhängigkeit einer aus zumindest einem Farbkanalbild erzeugten Dichtekarte erfolgt, wobei die Dichtekarte Informationen über eine Farbdichte des Farbkanalbildes in Abhängigkeit der Druckposition umfasst.

Dadurch kann erreicht werden, dass die Farbkorrektur weiter verbessert werden kann. Insbesondere kann die Farbkorrektur dadurch besonders genau auch in Bereichen mit sehr unterschiedlicher Farbdichte erfolgen.

Bevorzugt kann vorgesehen sein, dass die Dichtekarte erstellt wurde aus dem Farbkanalbild des farbseparierten Digitalbildes, wobei vorzugsweise mit einem Weichzeichner die Farbdichte in Abhängigkeit der Druckposition des Farbkanalbildes erhalten wird.

Dadurch kann erreicht werden, dass die Dichtekarte besonders unkompliziert und schnell erhalten werden kann, insbesondere ohne auf den vorgelagerten Colormanagement-Prozess und das originale vorgegebene Digitalbild zurückzugreifen.

Bevorzugt kann vorgesehen sein, dass die Korrekturdaten auf das Farbkanalbild des farbseparierten Digitalbildes in Abhängigkeit einer Gradationskurve angewendet werden.

Unter einer Gradationskurve ist im Sinne der vorliegenden Erfindung eine Kurve zu verstehen, die das Verhältnis von zumindest zwei Farbdichten zueinander beschreibt und vorliegend so zu verstehen ist, dass ein Faktor in Abhängigkeit der Farbdichte beschrieben wird, der auf den Korrekturwert angewendet werden kann.

Somit kann für die Farbkorrektur eine Gradationskurve verwendet werden, die die Stärke der Korrektur in Abhängigkeit der Farbdichte stellt. Beispielsweise kann die Gradationskurve vorsehen, dass die Bereiche mit einer geringeren Farbdichte proportional weniger korrigiert werden als die Bereiche hoher Farbdichte, oder umgekehrt.

Dadurch kann erreicht werden, dass sich Feinheiten der Farbkorrektur besonders schnell und einfach einstellen lassen.

Bevorzugt kann vorgesehen sein, dass der Korrekturwert abhängig von der Druckbreite des Digitaldruckers ist.

Dadurch kann vorteilhafterweise erreicht werden, dass Fehler korrigiert werden können, die insbesondere durch Schwankungen am Druckkopf des Digitaldruckers entlang der Druckbreite, also quer zur einer Druckvorschubrichtung, vorliegen.

Bevorzugt kann vorgesehen sein, dass das Bereitstellen der Korrekturdaten für den Digitaldruck in Schritt a) ein Drucken des farbseparierten Digitalbildes und/oder eines digitalen Testbildes mit dem Digitaldrucker umfasst und ein Erfassen von Farbwerten des gedruckten farbseparierten Digitalbildes und/oder digitalen Testbildes mit einem optischen Farbmessgerät, wobei die Korrekturwerte erstellt werden anhand von Abweichungen des für eine Druckposition gemessenen Farbwertes von dem für das vorgegebene Digitalbild und/oder das digitale Testbild an dieser Druckposition erwarteten Farbwert.

Unter einem digitalen Testbild ist ein vorgegebenes Digitalbild zu verstehen, dass so ausgestaltet ist, dass aus dem Druck des Testbildes besonders effizient Korrekturdaten gewonnen werden können.

Durch das vorbeschriebene Erfassen der Farbwerte kann erreicht werden, dass die Korrekturdaten besonders verlässlich sind.

Insbesondere kann vorgesehen sein, dass das Drucken auf dem gleichen Substrat erfolgt, auf dem auch das vorgegebene Digitalbild gedruckt werden soll.

Dadurch kann vorteilhafterweise erreicht werden, dass auch Effekte des Substrates bei der Farbkorrektur einfach berücksichtigt werden können.

Bevorzugt kann vorgesehen sein, dass die Schritte a) und b) mehrfach iterativ hintereinander durchgeführt werden. Dabei kann insbesondere vorgesehen sein, dass das Bereitstellen der Korrekturdaten eines auf Schritt b) folgenden Schrittes a) ein Drucken des farbkorrigierten farbseparierten Digitalbildes umfasst, wobei in dem darauffolgenden Schritt b) die Korrekturdaten auf das bereits farbkorrigierte farbseparierte Digitalbild angewendet werden und ein weiter farbkorrigiertes farbsepariertes Digitalbild erhalten wird.

Dadurch kann erreicht werden, dass die Farbkorrektur ein besonders homogenes Druckergebnis erreicht.

Besonders bevorzugt kann vorgesehen sein, dass die Schritte a) und b) iterativ durchgeführt werden, bis das Ergebnis der Korrektur gut genug ist. Insbesondere können die Schritte a) und b) so lange durchgeführt werden, bis die in Schritt a) bereitgestellten Korrekturwerte ausreichend klein sind.

Optional kann der Erfolg des Verfahrens überprüft werden, wobei mit den entsprechend angewendeten Korrekturdaten das vorgegebene Digitalbild gedruckt wird.

Bevorzugt kann vorgesehen sein, dass das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Digitaldrucker beruht.

Bevorzugt kann vorgesehen sein, dass das Erfassen der Farbwerte optional mehrfach hintereinander mit unterschiedlichen Einstellungen des optischen Farbmessgerätes durchgeführt wird, insbesondere bei verschiedenen Lichtverhältnissen und/oder Belichtungszeiten.

Dadurch kann erreicht werden, dass auch nur sehr geringe Farbabweichungen erkannt werden können.

Bevorzugt kann vorgesehen sein, dass das vorgegebene Digitalbildes ein Farbmodell aufweist ausgewählt aus RGB, CMY und CMYK, wobei das Farbmodell insbesondere CMYK ist.

Bevorzugt kann vorgesehen sein, dass das Verfahren ein Erstellen der Informationen über die vom Drucker zu setzende Druckpunkte umfasst, wobei Schritt b) beim Erstellen der Informationen über die vom Drucker zu setzende Druckpunkte erfolgt, insbesondere jeweils nachdem ein Druckpunkt erstellt wurde.

Darunter ist zu verstehen, dass beim RIP-Prozess des vorgegebenen Digitalbildes die Korrekturdaten erfindungsgemäß angewendet werden, wobei die Korrekturdaten nicht vor Erstellung eines Druckpunktes berücksichtigt werden sondern erst, wie vorbeschrieben, auf einen Druckpunkt angewendet werden, wenn dieser erstellt wurde.

Dadurch können vorteilhafterweise direkt beim Erstellen des zu druckenden Digitalbildes die gleichen Korrekturergebnisse erreicht werden wie mit einer Korrektur nach dem RIP-Prozess.

Mit der Erfindung wird ferner eine Vorrichtung vorgeschlagen, aufweisend einen Datenspeicher, eine Recheneinheit, einen Digitaldrucker zur Ausgabe eines vorgegebenen Digitalbildes und optional ein optisches Farbmessgerät, wobei die Vorrichtung dazu eingerichtet ist das vorbeschriebene Verfahren durchzuführen.

Mit der Erfindung wird ferner eine Verwendung des vorbeschriebenen Verfahrens oder der vorbeschriebenen Vorrichtung zur Farbkorrektur für den Druck von Dekoren vorgeschlagen, insbesondere für den Druck von Dekoren für Dekorpaneele.

Es konnte überraschenderweise gezeigt werden, dass sich das vorbeschriebene Verfahren besonders gut für die Farbkorrektur bei solchen Anwendungen eignet, da insbesondere bei dem Druck von Dekorpaneelen gewährleistet werden muss, dass die Farbe zwischen unterschiedlichen Chargen möglichst nicht abweicht, da diese auch gemeinsam nebeneinander verlegt werden können und somit Farbabweichungen besonders schnell auffallen. Zudem ist für derartige Anwendungen ein hoher Durchsatz notwendig, so dass eine besonders schnelle Farbkorrektur, wie sie mit der vorliegenden Erfindung erreichbar ist, besonders vorteilhaft ist.

## Patentansprüche

1. Verfahren zur Farbkorrektur eines Digitaldruckes, wobei der Digitaldruck die Ausgabe eines vorgegebenen Digitalbildes mit einem Digitaldrucker vorsieht, wobei das vorgegebenen Digitalbild dem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über vom Drucker zu setzende Druckpunkte des entsprechenden Druckfarbkanals aufweist und wobei ein Druckpunkt durch seine Druckposition und Druckpunktgröße definiert ist,
wobei das Verfahren die Schritte aufweist:
a) Bereitstellen von Korrekturdaten für den Digitaldruck, wobei die Korrekturdaten zumindest einen Korrekturwert für zumindest ein Farbkanalbild umfassen,
b) Anwenden der Korrekturdaten auf das farbseparierte Digitalbild, wobei ein farbkorrigiertes farbsepariertes Digitalbild erhalten wird,
c) optional Drucken des farbkorrigierten farbseparierten Digitalbildes mit dem Digitaldrucker.

2. Verfahren nach Anspruch 1, wobei der Korrekturwert auf die für das Farbkanalbild vorgesehenen Druckpunkte angewendet wird, insbesondere durch Anpassung der Druckpunktgrößen von zumindest einem Teil der Druckpunkte des Farbkanalbildes in Abhängigkeit des Korrekturwertes.

3. Verfahren nach Anspruch 2, wobei der Korrekturwert nicht auf die Druckpunktgröße von Druckpunkten angewendet wird, deren Druckpunktgröße 0 ist.

4. Verfahren nach einem der Ansprüche 2 oder 3, wobei die Druckpunktgrößen der Druckpunkte der Farbkanalbilder eine begrenzte Anzahl diskreter Druckpunktgrößenwerte annehmen können, insbesondere eine durch den Digitaldrucker begrenzte Anzahl.

5. Verfahren nach einem der Ansprüche 1 bis 4, wobei der Korrekturwert derart angewendet wird, dass der Korrekturwert auf die für das Farbkanalbild vorgesehenen Druckpunkte verteilt wird, wobei das Verteilen des Korrekturwertes derart erfolgt, dass der über die Summe der Druckpunkte erreichte Farbunterschied insgesamt dem Korrekturwert entspricht.

6. Verfahren nach einem der Ansprüche 4 oder 5, wobei für den Fall, dass der Druckpunktgrößenwert eines Druckpunktes beim Anwenden der Korrekturdaten kleiner werden soll als der kleinste mögliche Druckpunktgrößenwert, die Druckpunktgröße des Druckpunktes auf die Druckpunktgröße 0 gesetzt wird.

7. Verfahren nach einem der Ansprüche 4 bis 6, wobei für den Fall, dass der Druckpunktgrößenwert eines Druckpunktes beim Anwenden der Korrekturdaten größer werden soll als der größte mögliche Druckpunktgrößenwert, die Druckpunktgröße des Druckpunktes auf den größten möglichen Druckpunktgrößenwert gesetzt wird.

8. Verfahren nach einem der Ansprüche 4 bis 7, wobei beim Ändern des Druckpunktgrößenwerts der Druckpunkte des Farbkanalbildes beim Anwenden der Korrekturdaten ein Fehler-Verteilungsalgorithmus angewendet wird (Dithering), beispielsweise ein Floyd-Steinberg-Algorithmus.

9. Verfahren nach einem der Ansprüche 1 bis 8, wobei die Anwendung der Korrekturdaten auf das farbseparierte Digitalbild in Abhängigkeit einer aus zumindest einem Farbkanalbild erzeugten Dichtekarte erfolgt, wobei die Dichtekarte Informationen über eine Farbdichte des Farbkanalbildes in Abhängigkeit der Druckposition umfasst.

10. Verfahren nach Anspruch 9, wobei die Dichtekarte erstellt wurde aus dem Farbkanalbild des farbseparierten Digitalbildes, wobei vorzugsweise mit einem Weichzeichner die Farbdichte in Abhängigkeit der Druckposition des Farbkanalbildes erhalten wird.

11. Verfahren nach einem der Ansprüche 9 oder 10, wobei die Korrekturdaten auf das Farbkanalbild des farbseparierten Digitalbildes in Abhängigkeit einer Gradationskurve angewendet werden.

12. Verfahren nach einem der Ansprüche 1 bis 11, wobei der Korrekturwert abhängig von der Druckbreite des Digitaldruckers ist.

13. Verfahren nach einem der Ansprüche 1 bis 12, wobei das Bereitstellen der Korrekturdaten für den Digitaldruck in Schritt a) ein Drucken des farbseparierten Digitalbildes und/oder eines digitalen Testbildes mit dem Digitaldrucker umfasst und ein Erfassen von Farbwerten des gedruckten farbseparierten Digitalbildes und/oder digitalen Testbildes mit einem optischen Farbmessgerät, wobei die Korrekturwerte erstellt werden anhand von Abweichungen des für eine Druckposition gemessenen Farbwertes von dem für das vorgegebene Digitalbild und/oder das digitale Testbild an dieser Druckposition erwarteten Farbwert.

14. Vorrichtung aufweisend einen Datenspeicher, eine Recheneinheit, einen Digitaldrucker zur Ausgabe eines vorgegebenen Digitalbildes und optional ein optisches Farbmessgerät, wobei die Vorrichtung dazu eingerichtet ist das Verfahren nach einem der Ansprüche 1 bis 13 durchzuführen.

15. Verwendung des Verfahrens nach einem der Ansprüche 1 bis 13 oder der Vorrichtung nach Anspruch 14 zur Farbkorrektur für den Druck von Dekoren, insbesondere für den Druck von Dekoren mit geringer Farbvielfalt, beispielsweise für Holz- und/oder Steindekore.
